Europäisches Patentamt

European Patent Office

Office européen des brevets

(11) Veröffentlichungsnummer: **0 235 364 B1**

(12) **EUROPÄISCHE PATENTSCHRIFT**

(45) Veröffentlichungstag der Patentschrift:
19.12.90

(51) Int. Cl.⁵: **B60C 15/04**

(21) Anmeldenummer: 86115864.0

(22) Anmeldetag: 14.11.86

(54) Wulstkern für Fahrzeugluftreifen.

(30) Priorität: 31.01.86 DE 3602873

(43) Veröffentlichungstag der Anmeldung:
09.09.87 Patentblatt 87/37

(45) Bekanntmachung des Hinweises auf die Patenterteilung:
19.12.90 Patentblatt 90/51

(84) Benannte Vertragsstaaten:
AT BE CH DE ES FR GB GR IT LI LU NL SE

(56) Entgegenhaltungen:
DE-A- 2 044 995
DE-A- 2 364 274
DE-A- 3 406 926
DE-A- 3 440 440
FR-A- 2 232 455
FR-A- 2 390 299

(73) Patentinhaber: **Continental Aktiengesellschaft,
Königsworther Platz 1, D-3000 Hannover 1(DE)**

(72) Erfinder: **Rach, Heinz-Dieter, Planetenring 32,
D-3008 Garbsen 1(DE)**
Erfinder: **Frerichs, Udo, Buchenweg 7,
D-3012 Langenhagen 8(DE)**

## Beschreibung

Die Erfindung betrifft einen Fahrzeugluftreifen, dessen Wülste am radial inneren Umfang einer Felge angeordnet sind, mit je einem Wulstkern mit im wesentlichen rundem Querschnitt, in Form eines endlosen Ringes.

Ein Fahrzeugrad mit einem derartigen Wulstkern wird z.B. in der DE-OS 30 00 428 beschrieben. Im Gegensatz zu den heute überwiegend verwendeten Fahrzeugrädern werden bei einem solchen Fahrzeugrad die Wulstkerne des Reifens in unerheblichem Maße auf Zug, dagegen in hohem Umfang auf Druck beansprucht. Dies wurde beim Reifen im Beispiel der DE-OS 30 00 428 noch nicht berücksichtigt. Bei Fahrzeugrädern mit radial innen angeordneten Reifenwülsten besteht darüber hinaus häufig das Problem, daß die Reifenwülste relativ zu den Wulstkernen schwenkbar ausgebildet sein müssen, damit der Reifen auf eine einteilige Felge montiert werden kann. Auf diese Problematik wird ausführlich in der DE-OS 32 44 046 und in der DE-OS 32 46 624 eingegangen. In einer älteren Anmeldung (P 34 40 440.6) wurde bereits vorgeschlagen, die Drähte der äußeren Lage eines Wulstkernrings mittels eines Lotes miteinander zu verbinden, um so eine hohe Sicherheit bei einer Stauchbeanspruchung des Reifenwulstes zu erzielen.

Weiterhin ist aus der DE-A-23 64 274 ein Reifen gemäß dem Obergriff des Anspruchs bekannt, bei dem die ringförmigen Wulstkerne in Umfangsrichtung dehnungsfähig ausgebildet sind. Dies wird durch eine Innenseele aus Gummi und außen schraubenförmig angeordnete Stahlseile erreicht. Ein solcher Wulstkern ist für ein Rad der eingangs genannten Art nicht geeignet, da er weder drucknoch zugfest ist.

Aus der FR-A-22 32 455 ist es schließlich bekannt, für Wulstkerne zum Teil rohrförmige Festigkeitsträger zu verwenden.

Der vorliegenden Erfindung liegt die Aufgabe zugrunde, einen Wulstkernring anzugeben, mit dem das angeführte Fahrzeugrad weiterhin optimiert wird, und zwar vor allem im Hinblick auf eine Erhöhung der Biegesteifigkeit und auf eine Gewichtsreduzierung unter Erhaltung oder Verbesserung der bisher bereits erzielten Wulstsitzsicherheit, weiterhin im Hinblick auf die Vermeidung einer Materialaufstauchung in Umfangsrichtung zwischen Wulstmaterial und dem Wulstkernring, die vor allem bei der Montage des Reifens auftreten kann.

Diese Aufgabe wird bei einem gattungsgemäßen Reifen durch die kennzeichnenden Merkmale des Anspruchs gelöst.

Die Erfindung beruht vor allem auf der Erkenntnis, daß es bei der Montage der eingangs genannten Reifen im Wulstinnern zu Materialaufstauchungen kommen kann, die die Rundlaufwerte beeinträchtigen können. Durch die erfindungsgemäßen Maßnahmen wird eine Relativbewegung zwischen Wulstkern und Reifenwulst in Umfangsrichtung zuverlässig vermieden.

Nachfolgend werden mehrere Ausführungsbeispiele der Erfindung anhand einer Zeichnung erläutert.

Es zeigt

Fig. 1 einen Wulstkernring mit einer hohlen Innenseele und einer Lage hohler Festigkeitsträger in einer perspektivischen Teilansicht,

Fig. 2 einen Wulstkern mit einer quadratischen Innenseele in einem radialen Teilschnitt,

Fig. 3 einen Wulstkern, bei dem sich in der äußeren Lage Festigkeitsträger mit hohlem und vollem Querschnitt abwechseln, in einem radialen Teilschnitt,

Fig. 4 einen Wulstkern, bei dem die Innenseele von einem Hartschaumring gebildet wird, in einem radialen Teilschnitt,

Fig. 5 einen Wulstkern, bei dem im Gegensatz zu dem der Fig. 4 die Festigkeitsträger in der der Innenseele benachbarten Lage einen hohlen Querschnitt aufweisen, in einem radialen Teilschnitt,

Fig. 6 einen Wulstkern, bei dem die Innenseele von einem rechteckigen Hohlprofil gebildet wird, in einem radialen Teilschnitt,

Fig. 7 einen Wulstkern, bei dem die Innenseele von einem wendelförmig gewickelten Festigkeitsträger gebildet wird, in einem radialen Teilschnitt,

Fig. 8 den Wulstkern der Fig. 7 in einem Teilschnitt senkrecht zur Drehachse des Kernrings,

Fig. 9 einen Wulstkern mit einer rohrförmigen Innenseele und einer Lage aus einem wendelförmig gewickelten Festigkeitsträger in einem radialen Teilschnitt,

Fig. 10 den Wulstkern der Fig. 9 in einer Seitenansicht senkrecht zur Drehachse des Kernrings,

Fig. 11 einen Wulstkernring mit quer auf der Mantelfläche verlaufenden Erhebungen in einer perspektivischen Teilansicht,

Fig. 12 einen Wulstkernring, bei dem sich die Erhebungen auf einem Streifenmaterial befinden, in einer perspektivischen Teilansicht,

Fig. 13 ein Fahrzeugrad, bei dem der Reifenwulst einen Wulstkern gemäß Fig. 1 aufweist.

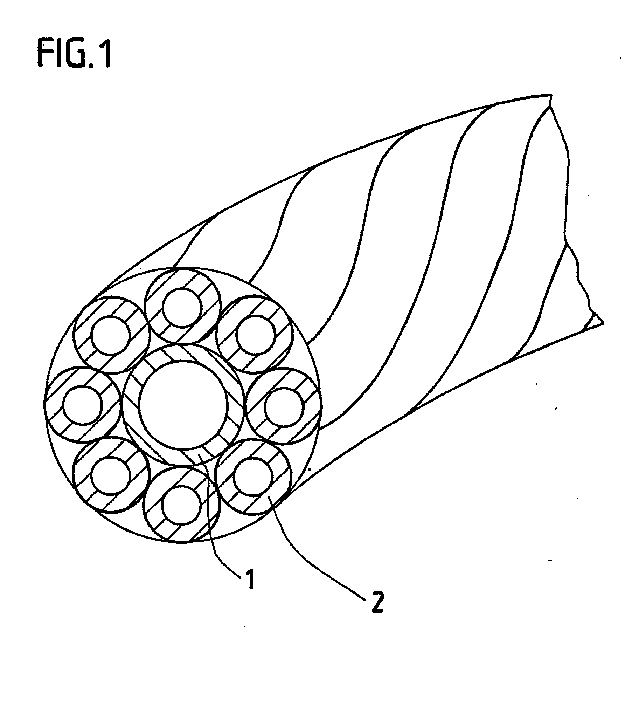

Der in Fig. 1 dargestellte Wulstkernring ist im wesentlichen aus einer rohrförmigen Innenseele 1 und ebenfalls rohrförmigen Festigkeitsträgern 2 aufgebaut, die in einer Lage die Innenseele umgeben. Die hohlen Festigkeitsträger 2 sind derart um die Innenseele 1 gewickelt, daß sie auf der Umfangslänge des gesamten Wulstkernrings vier bis zehn Schlaglängen bilden. Die Innenseele 1 kann hohl oder auch mit einem leichten Füllmaterial ausgefüllt sein. Um hohe Trägheitsmomente zu erzielen, sollte der Durchmesser der Innenseele 1 erheblich größer gewählt sein als der Durchmesser der einzelnen Festigkeitsträger 2. Die Festigkeitsträger 2 können alle gleich dick oder auch unterschiedlich dick gewählt sein. Die Innenseele 1 und die Festigkeitsträger 2 bestehen bevorzugt aus Metall, z.B. Stahl. Bei Bedarf können jedoch auch andere Materialien, z.B. Glasfasermaterial oder andere stauchfeste Kunststoffe zum Einsatz kommen. Im Beispiel der Fig. 1 wird die die Innenseele 1 umgebende Lage von acht Festigkeitsträgern 2 gebildet, jedoch kommt selbstverständlich auch eine andere Anzahl in Frage.

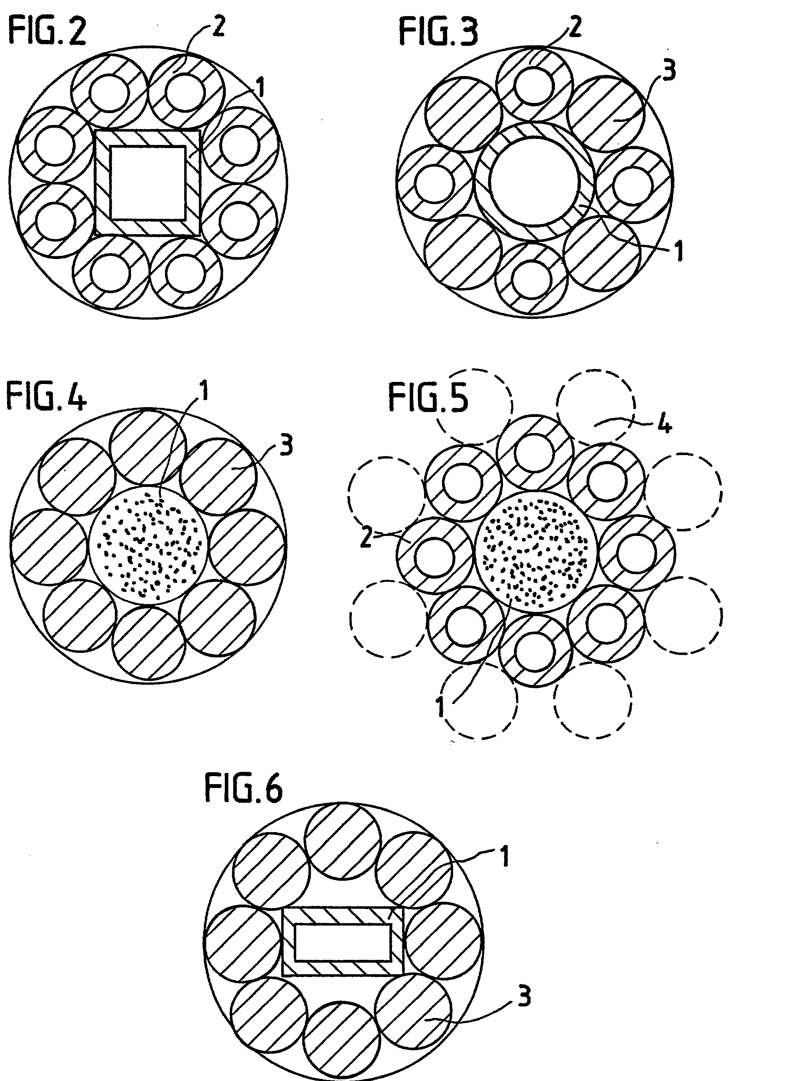

Der Wulstkern der Fig. 2 unterscheidet sich von dem der Fig. 1 lediglich dadurch, daß statt einer runden Innenseele 1 eine solche mit einem quadratischen Querschnitt eingesetzt ist.

Beim Beispiel der Fig. 3 wird die Innenseele 1 aus Fig. 1 eingesetzt, während in der sie umgebenden Lage hohle Festigkeitsträger 2 und Festigkeitsträger mit vollem Querschnitt 3 verwendet werden.

In Fig. 4 ist ein Wulstkern dargestellt, bei dem die Innenseele 1 von einem lediglich als Abstandselement dienenden Ring gebildet wird, der z.B. aus Hartschaum bestehen kann. Um den Innenring 1 herum sind Festigkeitsträger 3 mit vollem Querschnitt in einer Lage angeordnet. Das Beispiel der Fig. 5 unterscheidet sich von dem der Fig. 4 lediglich dadurch, daß um den Innenseelenring 1 hohle Festigkeitsträger 2 angeordnet sind. Die gestrichelten Kreise 4 sollen andeuten, daß prinzipiell Festigkeitsträger 2, 3 auch in mehreren Lagen um die Innenseele 1 herum angeordnet sein können. Dies gilt selbstverständlich auch für die anderen Beispiele.

Fig. 6 zeigt einen Wulstkern, bei dem die Innenseele 1 von einem rechteckigen Hohlprofil gebildet wird, während sich in der sie umgebenden Lage Festigkeitsträger 3 mit vollem Querschnitt befinden. Je nach den Anforderungen kann das Rechteck der Innenseele 1 flach oder hochgestellt im Wulstkernring angeordnet sein.

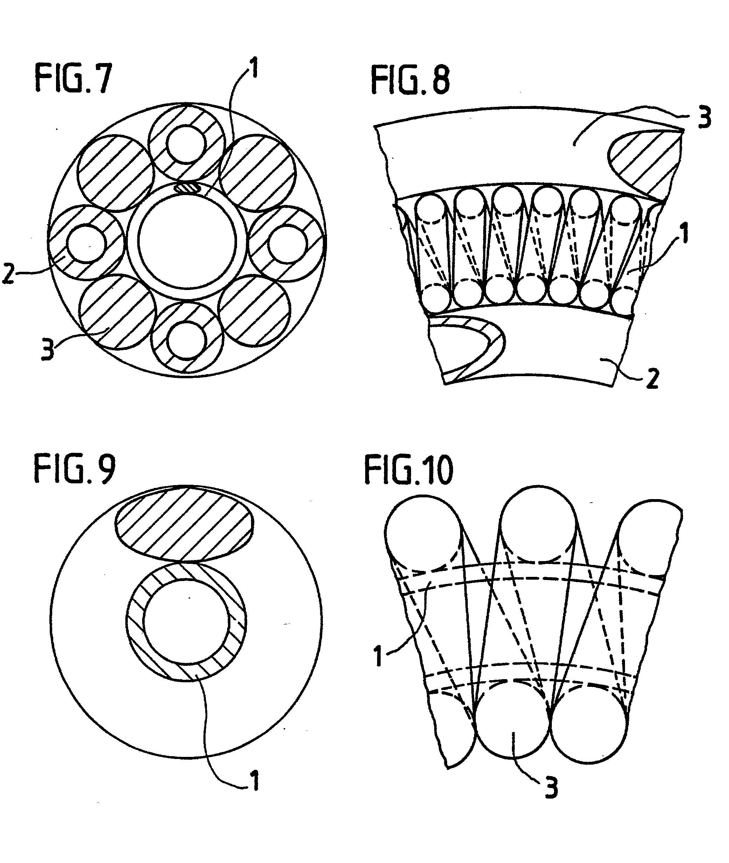

In den Fig. 7 und 8 ist ein Wulstkernring dargestellt, bei dem die Innenseele 1 aus einem wendelförmig gewickelten Festigkeitsträger mit in Umfangsrichtung des Wulstkernrings aneinanderliegenden Wendeln besteht, so daß die Innenseele 1 wiederum einen Hohlraum mit relativ großen Durchmesser aufweist und als Abstandshalter für die Festigkeitsträger 2 und 3 dient. Die hohlen und vollen Festigkeitsträger 2, 3 sind wieder mit vier bis zehn Schlägen um die Innenseele 1 gewickelt.

Beim Wulstkernring der Fig. 9 und 10 besteht die Innenseele 1 aus einem rohrförmigen Festigkeitsträger, wie er im Beispiel der Fig. 1 eingesetzt ist. In der benachbarten Lage ist ein Festigkeitsträger 3 mit vollem Querschnitt wendelförmig um die Innenseele 1 gewickelt, wobei zumindest auf der radial inneren Seite des Wulstkernrings die einzelnen Wendeln aneinanderliegen. Ein solcher Wulstkernring ist besonders gut dazu geeignet, bei der Reifenmontage zu befürchtende Materialaufstauchungen im Wulstbereich zu vermeiden.

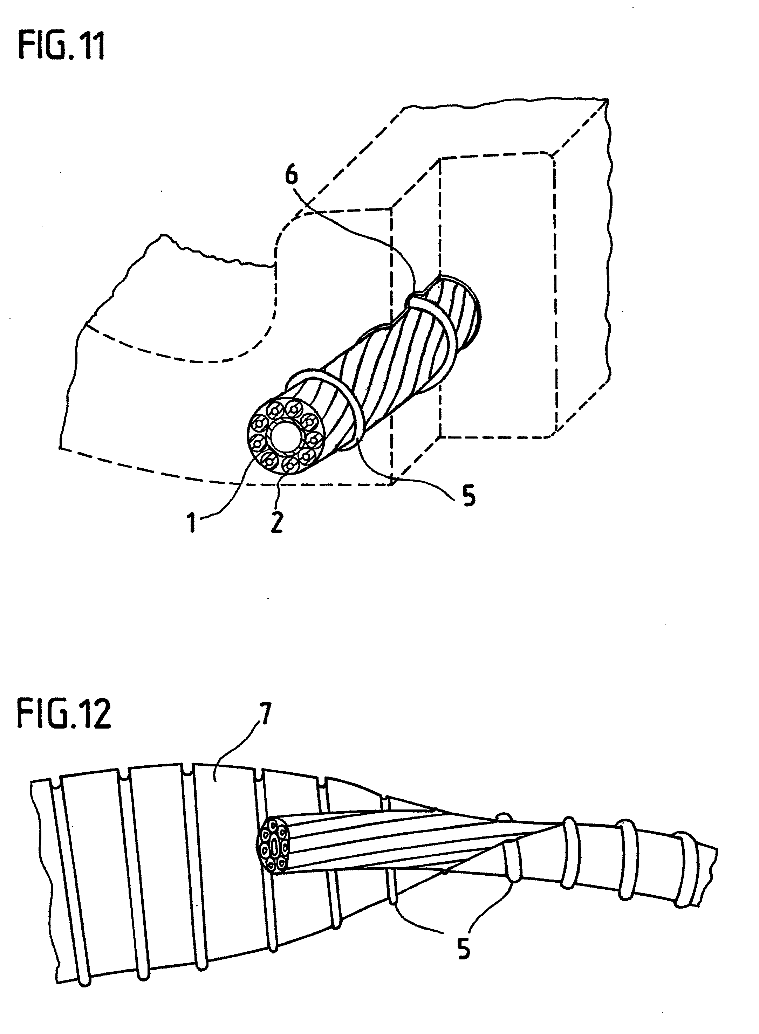

Auch das Beispiel der Fig. 11 dient dazu, derartige Materialaufstauchungen im Wulstbereich zu vermeiden. Auf dem Außenmantel eines Wulstkernrings gemäß Fig. 1 befinden sich mit Abstand zueinander angeordnete Erhebungen 5, die in Ebenen senkrecht zur Umfangsrichtung des Kernrings verlaufen, und die mit angepaßten Nuten 6 im Reifenwulst in Eingriff stehen, wobei der Wulstkern in bekannter Weise nichthaftend im Reifenwulst eingebettet ist. Durch diese Maßnahmen wird eine Schwenkbarkeit des Reifenwulstes um den Wulstkernring erzielt, dabei jedoch eine Relativbewegung des Reifenwulstes zum Wulstkernring in Umfangsrichtung des Wulstkernrings vermieden. Man kann selbstverständlich auch zu diesem Ziel kommen, wenn man am Wulstkernring Nuten und am Reifenwulst entsprechende Erhebungen anbringt.

Fig. 12 zeigt eine weitere Möglichkeit zur Lösung dieses Problems. Dabei wird ein Wulstkern der Fig. 1 mit einem streifenförmigen Material 7, das wiederum Erhebungen 5 aufweist, umwickelt. Das Material 7 kann aus Metall, Gummi oder Kunststoff bestehen, und es kann durch Vulkanisieren oder Kleben am Wulstkern befestigt sein. Um mögliche Aufstauchungen in Umfangsrichtung des Wulstkernrings zu vermeiden, ist wegen der hohen Drucksteifigkeit als Material 7 eine Metallfolie besonders gut geeignet.

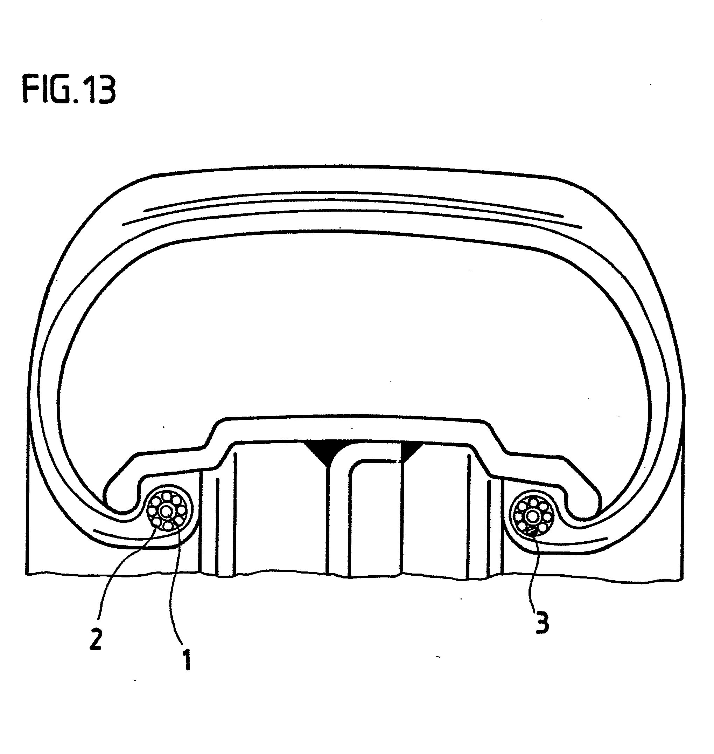

In Fig. 13 ist ein Fahrzeugrad dargestellt, wie es z.B. ausführlich in der DE-OS 30 00 428 beschrieben ist. Es unterscheidet sich jedoch von dem dort beschriebenen dadurch, daß einer der vorstehend beschriebenen erfindungsgemäßen Wulstkernringe eingebaut ist. Dadurch wird die Wulstsitzsicherheit vergrößert, die Biegesteifigkeit der Wulstkernringe erhöht, und das Gewicht des gesamten Fahrzeugrads erheblich reduziert.

## Patentansprüche

Fahrzeugluftreifen, dessen Wülste am radial inneren Umfang einer Felge angeordnet sind, mit je einem Wulstkern mit im wesentlichen rundem Querschnitt, in Form eines endlosen Ringes, und wobei die Innenseele (1) des Wulstkernes hohl ist oder von einem relativ zu den Festigkeitsträgern (2, 3) leichten, als Abstandselement dienenden Stützring gebildet wird, dadurch gekennzeichnet, daß die Festigkeitsträger (2, 3) im wesentlichen unmittelbar aneinanderliegen, wobei um eine Innenseele (1) herum in zumindest einer Lage Festigkeitsträger (2, 3) angeordnet sind, die einen vollen oder hohlen Querschnitt aufweisen, und daß der Wulstkern auf seinem Außenmantel mit Abstand zueinander angeordnete Erhebungen (5) oder Nuten aufweist, die in Ebenen senkrecht zur Umfangsrichtung des Wulstkerns verlaufen und die mit angepaßten Nuten (6) oder Erhebungen im Reifenwulst in Eingriff stehen, wobei der Wulstkern nichthaftend im Reifenwulst eingebettet ist.

## Claims

Pneumatic vehicle tyre, the beads of which are disposed on the radially inner circumference of a rim, each bead having a bead core with a substantially circular cross-section, in the form of an endless ring, wherein reinforcing members (2, 3) are disposed around an inner core (1) in at least one layer and have a solid or hollow cross-section, and wherein the inner core (1) of the bead core is hollow or is formed by a supporting ring, which is lighter than the reinforcing members (2, 3) and serves as a spacer member, characterised in that the reinforcing members (2, 3) lie substantially directly adjacent one another, and in that the bead core has, on its outer surface, spaced-apart raised portions (5) or grooves, which extend in planes perpendicular to the circumferential direction of the bead core and which are in engagement with adapted grooves (6) or raised portions in the tyre bead, the bead core being embedded in the tyre bead in a non-adherent manner.

## Revendications

Pneumatique de véhicule, dont les talons sont appliqués contre la périphérie radialement intérieure d'une jante, chaque talon comportant une tringle ayant une section sensiblement circulaire, sous la forme d'un anneau sans fin, des supports résistants (2, 3) étant disposés au moins sous forme d'une couche autour d'une âme interne (1) et ayant une section droite pleine ou creuse, l'âme interne (1) de la tringle de talon étant creuse ou bien étant constituée par un anneau léger d'appui servant d'éléments d'espacement pour les supports résistants (2, 3), caractérisé en ce que les supports résistants (2, 3) s'appliquent dans l'essentiel directement l'un contre l'autre, et en ce que la tringle de talon comporte, sur sa périphérie extérieure, des saillies (5) ou des rainures espacées l'une de l'autre, orientées dans des plans perpendiculaires à la direction circonférentielle de la tringle, et respectivement en prise avec des rainures (6) ou des saillies correspondantes formées dans le talon du pneumatique, la tringle de talon étant noyée de façon non adhérente dans le talon du pneumatique.

FIG.1

1

2

EP 0 235 364 B1

FIG.2

FIG.3

FIG.4

FIG.5

FIG.6

FIG.7

FIG.8

FIG.9

FIG.10

FIG.11

FIG.12

FIG.13